**Europäisches Patentamt**

(19) **European Patent Office**

**Office européen des brevets**

(11) Publication number: **0 218 642**
**B1**

## EUROPEAN PATENT SPECIFICATION

(45) Date of publication of the patent specification:
25.10.89

(51) Int. Cl.⁴: **F 16 F 7/00,** E 01 C 23/00,
E 01 C 23/09

(21) Application number: 86902252.5

(22) Date of filing: 27.03.86

(86) International application number:
PCT/US 86/00648

(87) International publication number:
WO 86/06143 (23.10.86 Gazette 86/23)

(54) **VIBRATION DAMPING DEVICE AND METHOD FOR A ROAD PLANER AND THE LIKE.**

(30) Priority: 08.04.85 US 720586

(43) Date of publication of application:
22.04.87 Bulletin 87/17

(45) Publication of the grant of the patent:
25.10.89 Bulletin 89/43

(84) Designated Contracting States:
AT BE DE FR GB IT LU NL SE

(56) References cited:
EP-A-0 028 141
WO-A-85/05425
DE-A-2 116 080
DE-A-2 263 977
FR-A-896 021
FR-A-2 291 897
GB-A-108 067
GB-A-1 293 391
US-A-1 294 467
US-A-1 461 787
US-A-2 417 347
US-A-3 695 562
US-A-4 255 482
US-A-4 333 685

(73) Proprietor: FEDERAL- MOGUL CORPORATION,
Legal Department P.O. Box 1966, Detroit, MI
48235 (US)

(72) Inventor: LEWIS, Roger, L., 11906 Cherokee Lane,
Leawood, KS 66202 (US)
Inventor: NORLAND, Richard, S., 6800 West 194th
Street, Stillwell, KS 66085 (US)
Inventor: JONES, Leon, D., 6968 Ludington Road,
Elba, NY 14058 (US)

(74) Representative: Archer, Philip Bruce, Urquhart-
Dykes & Lord Trinity Court Trinity Street
Priestgate, Peterborough Cambridgeshire PE1
1DA (GB)

EP 0 218 642 B1

# Description

This invention relates generally to vibration damping and, in particular, to a vibration damper for pavement working equipment.

Various types of equipment generate vibration which must be isolated or damped for optimum performance. For example, pavement working equipment such as planers, grinders, saws and the like generate and are subjected to relatively severe vibrational forces which, if left undamped, would seriously impair their performance. A typical piece of pavement working equipment includes a tool such as a saw, grinder or the like operably connected to a prime mover adapted for powering the tool and possibly for driving the piece of equipment.

For example, a Road Surfacing Apparatus is shown in our Arnswald U.S. Patent No. 4 333 685 and No. 4 333 686. The Arnswald road planers include cutter heads with circular, diamond-tipped saw blades mounted on a sub-frame which, in turn, is pivotally connected to a main frame. A prime mover comprising an internal combustion engine is also mounted on the sub-frame and provides balast for urging the cutter head into contact with a pavement surface. The engine drives the cutter head and the hydraulically-driven wheels of the planer.

The sub-frame of the Arnswald planer is subjected to vibration from both the engine and the cutter head, both of which are mounted thereon. The internal combustion engine produces primarily vibration in a vertical mode due to the reciprocation of its pistons. The cutter head, on the other hand, produces vibration with respect to the vertical, horizontal (along the direction of travel) and axial (transverse to the direction of travel) spatial axes. The vibration of the cutter head substantially reduces its effectiveness and greatly increases wear on the cutter blades.

The use of small metal particles for shock and vibration absorption has heretofore been proposed. For example, the Hovas U.S. Patent No. 1 294 497 discloses a shock absorber with a cylindrical container filled with small metal balls which interact with disks mounted on a plunger rod reciprocated within the container. The Brown U.S. Patent 2 417 347 discloses a vibration damper including compartments filled with metal particles ranging in size from shot to fine powder, depending upon the frequency of vibration to be absorbed.

However, heretofore there has not been available either a vibration damping device or method for a road planer and the like with the advantages and features of the present invention, and it is an object of the present invention to provide a roadway surfacing machine offering improvements in relation to one or more of the matters discussed above, or generally.

According to the invention there is provided a roadway surfacing machine as defined in claim 1 of the accompanying claims.

In a professed embodiment of the present invention, a vibration damper is provided for a road planer and the like. The road planer includes a main frame and a sub-frame pivotally connected thereto. A prime mover and a tool are mounted on the sub-frame and subject the latter to relatively severe vibration, which impairs the operation of the tool. The sub-frame includes a plurality of tubes each enclosing a bore. The bores are substantially filled with lead shot particles which are free to move and vibrate with respect to each other and the tubes and thus absorb vibrational energy from the prime mover and the tool.

The preferred embodiment employs a method of damping vibration which includes the steps of providing a frame member with an enclosure, placing lead shot particles in the enclosure, vibrating the frame with a prime mover and a tool, causing the particles to vibrate with respect to each other and with respect to the frame member, converting the vibrational energy of the particles at least partly to heat energy and dissipating the heat energy through the frame member.

Also in preferred embodiments of the present invention described below is provided a road planer which utilizes hollow frame members filled with particles for vibration damping; and this damper is adapted for use with a frame having a prime mover and a tool mounted thereon; and the damper utilizes random-sized lead shot as a slightly constrained mass for absorbing vibration; and in the damper at least some of the shot particles are elliptical in configuration; and in the damper at least some of the shot particles may be spherical in configuration. Moreover the damper increases blade life in pavement working equipment and the damper allows the pavement working equipment to operate at greater speeds than similar equipment undamped. The damper is also adapted for use on a variety of such equipment, including equipment for working existing and new pavement. In the embodiment the particles also function as balast and the damper is effective for controlling vibration in vertical, horizontal and axial spatial axes, is economical in operation, efficient to manufacture, capable of a long operating life and particularly well adapted for the proposed usage thereof. In the method of damping vibration disclosed, undesirable vibration is absorbed by the particles and vibrational energy in the particles is converted to thermal energy, and the thermal energy is dissipated, and the method of effecting this is particularly well adapted for use in pavement working equipment and the like.

In the accompanying drawings are set forth, by way of illustration and example, certain embodiments of this invention. In the drawings:

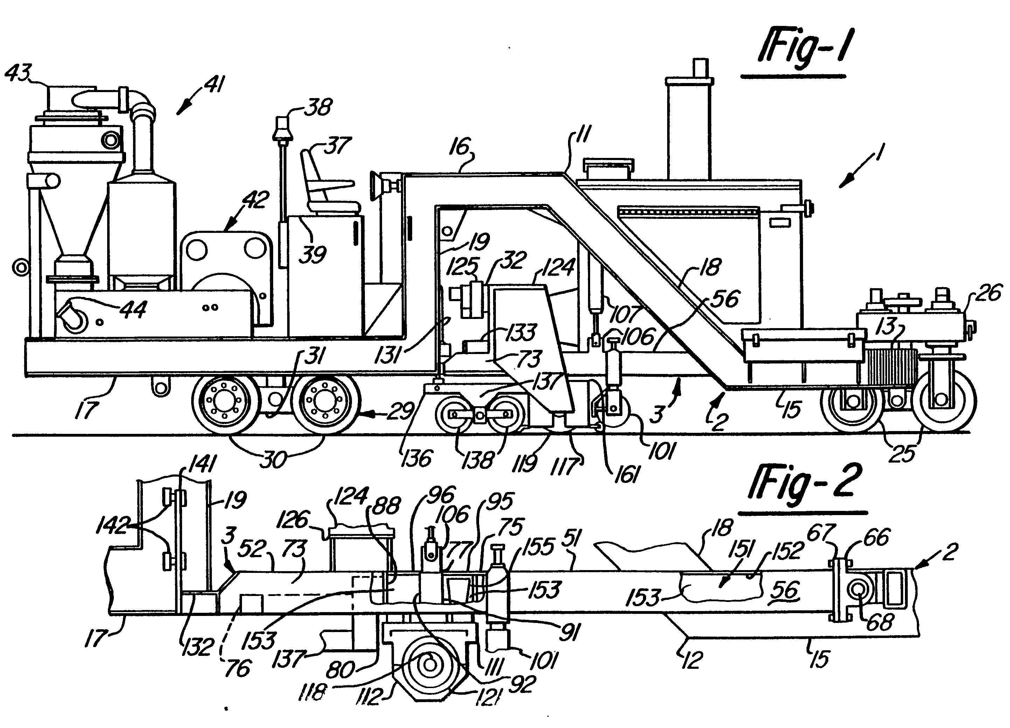

Fig. 1    is a side elevation of a road planer with a vibration damper embodying the present invention.

Fig. 2    is a fragmentary, longitudinal cross-section of the road planer particularly showing a sub-frame thereof.

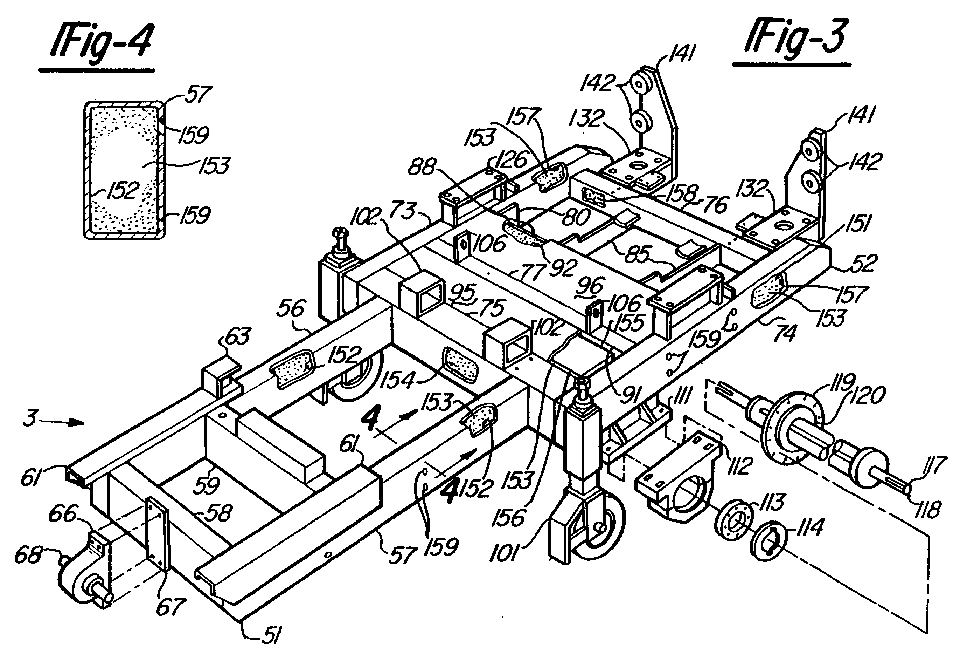

Fig. 3 is a perspective of the sub-frame with portions broken away to reveal the vibration damper construction.

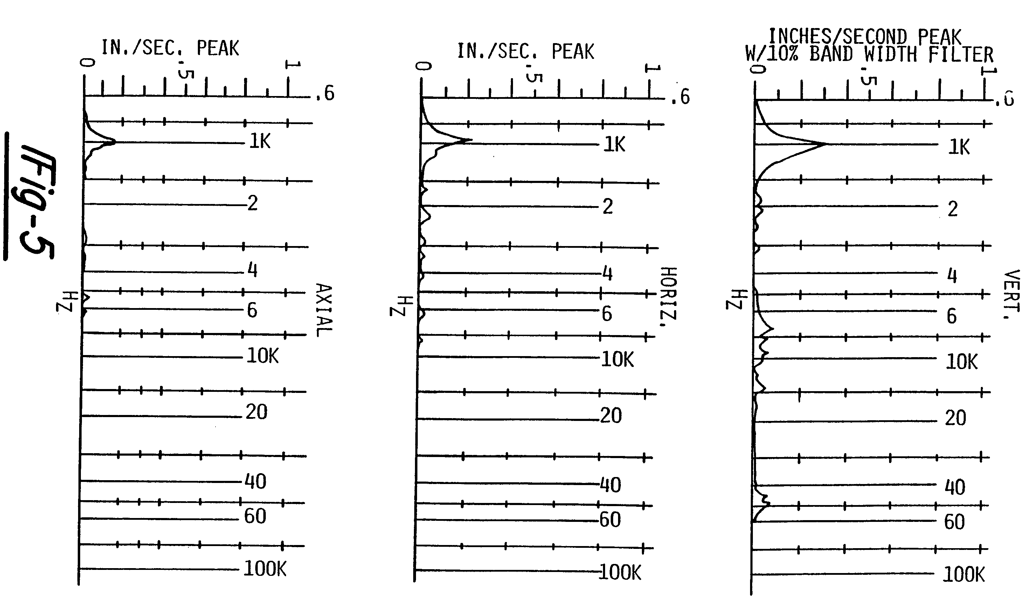

Fig. 4 is an enlarged, fragmentary, vertical cross-section of the sub-frame taken generally along line 4 - 4 in Fig. 3.

Fig. 5 is a graph shoving vibrational performance of a road planer with ingots for balast.

Fig. 6 is a graph showing vibrational performance of a road planer with spherical shot for vibration damping particles.

Fig. 7 is a graph showing vibrational performance of a road planer with random-sized lead shot for vibration damping particles.

Referring to the drawings in more detail, the reference numeral 1 generally designates a road planer embodying the present invention. The road planer 1 is of the type disclosed in U.S. Patent No. 4 333 685 for Road Surfacing Apparatus and U.S. Patent No. 4 333 686 for Road Planer Device with Auxiliary Outrigger Depth Control Wheels, for both of which we are the assignees and are incorporated herein by reference.

## I. Road Planer Description

The road planer 1 generally includes a rigid main frame 2 and a rigid sub-frame 3 pivotally connected to the main frame 2. The main frame 2 primarily comprises a pair of right and left side members 11, 12 extending substantially parallel to each other and joined at their respective front and back ends 13, 14. Each side member 11, 12 includes front, intermediate and back horizontal sections 15, 16 and 17. The intermediate section 16 is joined to the front and back sections 15, 16 by a rearwardly and upwardly sloping leg 18 and by a vertical leg 19 respectively. The side members 11, 12 preferably comprise hollow steel tubes with rectangular cross-sectional configurations.

A pair of front wheels 25 are mounted in tandem on the main frame front end 13 and are coupled to a steering mechanism 26. A rear wheel assembly 29 comprises two pair of wheels 30, each pair being mounted in tandem relationship on a pivotable rear wheel beam 31 which is attached to the main frame 2. The front and rear wheels 25, 30 are driven by an hydraulic drive system 32.

The planer 44 includes a pair of operator's stations each having a respective seat 37 and dual controls to facilitate making pavement cuts on either the right-hand or left-hand side of the planer 1. The operator's seats 37 and a warning beacon 38 are mounted on a pedestal 39 behind the side member vertical legs 19. A cutter head cooling and slurry disposal system 41 includes an auxiliary engine 42 mounted behind the pedestal 39 for powering a vacuum pump (not shown) connected to a cyclo-separator 43 and a water pump (not shown). Water for cooling is supplied to the planer 1 from a suitable tank vehicle (not shown) through a coupling 44. The auxiliary engine 42 may comprise, for example, a Perkins Model No. 4.154 4-cylinder water cooled diesel engine.

The sub-frame 3 generally comprises an engine section 51 in front and a tool section 52 in back. The engine section 51 includes a pair of right and left side tubes 56, 57 extending longitudinally in parallel relationship to the direction of travel of the road planer 1. A front crosstube 58 interconnects the side tubes 56, 57 at their respective front ends. An intermediate crosstube 59 extends between and interconnects the side tubes 56, 57 behind the front crosstube 58. Right and left engine mounts 61, 62 are attached to the engine section side tubes 56, 57 respectively at their front ends. A scavenging pump mount 63 is attached to the right engine mount 61 and projects upwardly therefrom.

The sub-frame 3 is pivotally connected to the main frame 2 by a sub-frame bearing assembly 66 attached to the front crosspiece 58 by a bearing mount plate 67. A transversely extending pivot pin 68 is journalled in the bearing assembly 66 and is received in respective ears (not shown) extending rearwardly from a crosstube (also not shown) of the main frame 2.

The sub-frame tool section 52 includes right and left side tubes 73, 74 extending in parallel, spaced relation longitudinally in the direction of travel. Front and back crosstubes 75, 76 extend transversely between and interconnect the side tubes 73, 74. The tool section side tubes 73, 74 are spaced farther apart transversely than the engine section side tubes 56, 57. The engine section side tubes 56, 57 are fixedly attached at their back ends to the front crosstube 75 of the sub-frame tool section 52.

A crossbar 77 extends transversely between the engine section side tubes 73, 74 parallel to and in spaced relation rearwardly from the front crosstube 75. The crossbar 77 preferably comprises solid steel having cross-sectional dimensions of, for example, four inches thick and eight inches high.

A pair of outer depth control carrier plates 80 are connected to and extend parallel to the side tubes 73, 74. A pair of inner depth control carrier plates 85 extend between the crossbar 77 and the back crosstube 76 in parallel relation to the side tubes 73, 74 and in spaced relation inwardly from the outer depth control carrier plates 80. A rear balast compartment panel 85 extends transversely between the depth control carrier plates 80, 85.

The sub-frame tool section 52 defines front and rear balast compartments 91, 92. A lower panel (not shown) extends longitudinally between the front crosstube 75 and the crossbar 77 and transversely between the side tubes 73, 74. A front upper panel 95 likewise extends longitudinally between the crosstube 75 and the crossbar 77 and transversely between the side tubes 73, 74 whereby the front balast compartment 91 is completely enclosed.

The rear balast compartment 92 is completely enclosed in a similar manner by a rear lower panel (not shown) and a rear upper panel 96, each of which extends longitudinally between the crossbar 77 and the rear balast compartment panel 88 and transversely between the outer depth control carrier plates 80.

A pair of outrigger wheel assemblies 101 are mounted on the side tubes 73, 74 at their front ends. A pair of engine mounts 102 are attached to and extend upwardly from the front crosstube 75. An internal combustion engine or prime mover 103 is mounted on the front and rear engine mounts 61, 102. The engine 103 may comprise, for example, a caterpillar MOD 3406DT 6-cylinder diesel engine developing 402 horsepower (296 kilowatts) at 2100 revolutions per minute. Of course, any suitable power source could be substituted for the diesel internal combustion engine 103 disclosed herein.

A pair of lower cylinder mounts 106 are attached to and project upwardly from the crossbar 77. A pair of doubleacting hydraulic ram cylinders 107 are attached to the lower cylinder mounts 106 and to the main frame 2.

A pair of cutter head mounting brackets 111 are attached to and depend downwardly from the side tubes 73, 74 approximately where the latter are attached to the crossbar 77. A respective cutter head bearing assembly 112 is attached to each mounting bracket 111 in downwardly-depending relationship therefrom. Each bearing assembly 112 includes a bearing race 113 and a retainer 114 mounted thereover. The cutter head bearing assemblies 112 preferably comprise Dodge special duty double taper roller bearings.

A cutter head 117 includes a shaft 118 journalled in the bearing assemblies 112 and a plurality of juxtaposed, circular blades 119 mounted on the shaft 118 in coaxial relationship with the rotational axis of the cutter head 117. The blades may comprise, for example, 14" (35.56 centimeters) diameter, 1/8 inch (0.33 centimeters) thick diamond blades of the type available from the Target Products Division of Federal-Mogul Corporation, Kansas City, Missouri. A standard cutter head such as that shown at 117 might include, for example, 174 of the blades 119 separated by .120 inches (0.30 centimeters) thick spacers 120. Cutter head pulleys 121 are attached to each end of the cutter head shaft 118. The engine 103 is coupled to a right angle drive 124 which includes pulleys (not shown) connected to the cutter head pulleys 121 by multiple drive belts (also not shown). The engine 103 is also connected to an hydraulic pump 125 for powering the hydraulic systems of the planer 1.

A right angle drive transmission 124 is mounted adjacent to its transverse drive shafts (not shown) on the side tubes 73, 74 by transmission support assemblies 126 projecting upwardly from respective side tubes 73, 74. The transmission support assemblies 126 are each located partly laterally adjacent to and partly behind the rear balast compartment 92.

A pair of actuated jack assemblies 131, which are available under the trade name "Jactuator", are mounted on respective jack mounts 132 extending rearwardly from the back crosstube 76. A pair of jack motors 133 are provided for driving the actuated jack assemblies 131 and are mounted on the inner depth control carrier plates 85. The actuated jack assemblies 131 are connected to the back ends of a pair of depth control wheel carriages 136, each of which is pivotally mounted on respective depth control carrier plates 80, 85. Each carriage 136 includes a pair of pivot beams 133 with a pair of depth control wheels 138 mounted therebetween in tandem relationship. A pair of cam plates 141 are mounted on the back ends of respective jack mounts 132 and each receives a pair of cam rollers 142 along its outer edge for engaging a respective side member vertical leg 19.

## II. Vibration Damper Description

A vibration damper 151 comprises an integral part of the sub-frame 3 and includes lead shot 153 and a lead ingot 155 located in spatial voids formed by the structural members of the sub-frame 3. The engine section side tubes 56, 57 include spatial voids or bores 152 adapted to receive the lead shot 153. The tool section front crosstube 75 encloses a front crosstube bore 154 adapted to receive the lead shot 153. The front balast compartment 91 receives a lead ingot 155. The lead ingot 155 is dimensionally slightly smaller than the front balast compartment 91 whereby a space 156 is formed therebetween and filled with lead shot 153. The rear balast compartment 92 is filled with lead shot 153, as are tool section side tube bores 157 and a back crosstube bore 158. The tube bores 152, 154, 157, 158 are accessed through fill holes 159 in the respective members which are welded shut after filling. If necessary, the members may be vibrated during filling to settle the lead shot 153 and to provide sufficient room for the amount specified for the road planer 1. The front and rear balast compartments 191, 192 are accessible prior to placement of the front and rear upper panels 95, 96 respectively.

The lead shot 153 is preferably random-sized and capable of passing through a No. 17/18 mesh. For example, "Illinois Heavy Pack Lead Shot", available from the Division Lead Company, Summit, Illinois, has been tested and found to be suitable for the proposed usage thereof. The Illinois Cold Pack Shot comprises both elliptical and spherical particles. Furthermore, the sizes of the individual particles vary somewhat. The random-sized Illinois Cold Pack Shot not only has superior performance characteristics as will be discussed more fully hereinafter, but also is less expensive than, for example, spherical shot. The mean diameter size of the shot 113 is in the range of approximately .030 to .040 inches (0.076 to 0.102 centimeters).

## III. Planner Operation

The planer 1 disclosed herein is intended primarily for removing high spots from new concrete-paved surfaces to conform them to specifications and also to restore existing concrete-paved surfaces by removing predetermined amounts of damaged or deteriorated concrete. Additional applications of the planer 1 include longitudinal cutting of anti-hydroplane grooves and conditioning of runways, parking lots and various other concrete-paved surfaces.

The cutter head 117 rotates in a counterclockwise direction when viewed from the right side of the grader 1 whereby it resists forward motion of the grader 1. The cutter head 117 is preferably subjected to substantial downward forces to maximize its performance. The downward loading of the cutter head 117 is accomplished by extending the hydraulic cylinders 107 until the hydraulic pressure in the hydraulic system is approximately 600 pounds per square inch (42 kilograms per square centimeter). If the hydraulic pressure exceeds this amount and for example, 800 pounds per square inch (56 kilograms per square centimeter), a safety valve is opened to prevent damage to the machine and injury to the operator. The weight of the lead shot 153, approximately 800 pounds in the disclosed planer 1, also facilitates holding the cutter head 117 in contact with the pavement surface. Also, the lead shot 153 cooperates with the members of sub-frame 3, the engine 103 and the ingot 155 to damp vibration and also to provide balast.

Extending the hydraulic cylinders 107 pivots the sub-frame 3 with respect to the main frame 1 about the pivot pin 68 and transfers a portion of the weight of the main frame 2 and the equipment associated therewith to the sub-frame 3. The depth control wheels 138 are located at a desired vertical position with respect to the sub-frame 3 by the actuated jack assemblies 131. The actuated jack assemblies 131 are preferably used to lower the depth control wheel carriages 136 to a level of a predesired planing depth. The actuated jack assemblies 131, since they employ screw-thread rods, will support the entire weight of the road planer 1 with the rear wheels 30 lifted off the surface. However, the actuated jack assemblies 131 are preferably adjusted by the operator so that the downward pressure on the cutter head 117 is slightly less than that required to lift the rear wheels 30. The hydraulic cylinders 107, on the other hand, are somewhat compressible. Furthermore, the entire main frame 2 is designed to flex a limited amount. Thus, upon encountering an uneven pavement surface condition, the main frame 2 deflects a limited amount which, together with the slight compression of the hydraulic cylinders 107, functions to maintain the cutter head 117 in substantially consistent contact with the pavement surface. Furthermore, the hydraulic cylinders 107 and the actuated jack assemblies 131 permit retraction of the cutter head 117 for transporting to and from job sites and the like.

In operation, it is desirable to cool the cutter head 117 to prolong the useful lives of the blades 119. Also, it is usually necessary to contain at least a portion of the slurry comprising cooling water mixed with grindings and tailings. A shroud 161 is provided over the cutter head 117 and includes a spray bar with water nozzles and intake ducts for removing the slurry. The shroud 161 is connected to the cyclo-separator 43 and comprises a part of the cooling and slurry disposal system 41.

As the sub-frame 3 is raised and lowered by the hydraulic cylinders 107, the sub-frame 3 is maintained in a substantially level position with respect to the main frame 2 by the cam rollers 142 engaging the side memberertical legs 19 to avoid racking or twisting of the sub-frame 3 relative to the main frame 2.

## IV. Vibration Damper Operation

In use, the cutter head 117 is a vibration source and vibrates with respect to all three spatial axes relative thereto. For purposes of describing the present invention, these axes will be referred to as:

1) vertical;
2) horizontal (in the direction of planer travel); and
3) axial (along the rotational axis of the cutter head 117 extending transverse to the direction of travel).

Of the three axial components of cutter head 117 vibration, the vertical is believed to be the most significant with respect to potential damage to the blades 119 and performance of the planer 1. Even though the blades 119 have diamond cutting edges, continual pounding, particularly from vertical vibration, causes damage and a loss of cutting ability. Cutter head vibration diverts energy from the cutting and planing function of the blades 119 so that the operator must reduce the forward speed of the planer 1 in order to maintain cut depth uniformity. The engine 103, which is mounted on the sub-frame 3, is also a vibration source and contributes to the vibration of the cutter head 117, particularly in a vertical mode because of the vertical reciprocation of the pistons of the engine 103.

By absorbing the vibrational energy of the cutter head 117, the vibrational movements in all three spatial axes can be reduced for longer blade life and a higher forward speed. A particularly effective way to absorb vibrational energy is to couple the cutter head 117 to an unconstrained or slightly constrained mass. The damper assembly 151 is designed to operate as such a slightly constrained mass. Stated generally, the cutter head vibrations are transmitted to and absorbed by the lead shot 153 which is sized and configured for maximum freedom of movement and vibration within the sub-frame 3. The individual particles of the lead shot 153 vibrate with respect to each other and also with respect to the members of the sub-frame 3. Thus, vibrational energy from both the cutter head 117 and the engine 103 is converted to thermal energy which is transferred to and dissipated by the sub-frame 3.

In sizing and configuring the lead shot 153, it is desirable to maximize both the potential and kinetic energies of the damper system 151. The potential energy U, may be expressed by the following equation wherein "K" represents the elastic coordinates of a particular shot particle and "q" represents the mass coordinates thereof.

Thus,

Potential Energy =

$$U = 1/2[K_{11}(q_1)^2 + K_{22}(q_2)^2 + K_{33}(q_3)^2 + ...) + (K_{12}q_1q_2 + ... + K_{21}q_2q_1 + K_{22}q_2q_3 ...) + K_{31}q_3q_1 + K_{32}q_3q_2 ... + )]$$

The kinetic energy "T" is represented by the following formula wherein "m" represents the mass inertial elements of an individual shot particle.

Thus,

Kinetic Energy =

$$T = 1/2[m_{11}(q_1)^2 + m_{22}(q_2)^2 + m_{33}(q_3)^2 ...) + (m_2q_1q_w + m_{13}q_1q_3 ... + m_{21}q_2q_1 + M_{23}q_2q_3 ... + m_{31}q_3q_1 + m_{32}q_3q_2 + ...)]$$

In both of the above equations, the potential and kinetic energies of the particle are expressed as sums of particle movement in all three spatial axes. Also, it can be concluded from the above formulas that the potential and kinetic energies are directly related to the mass, i.e. the density, of the lead shot. The density of the lead shot 153 is directly related to the size thereof because the smaller shot sizes tend to have smaller percentages of void area. With spherical particles, maximum packing density is obtained if the individual spheroids are packed in a hexagonal close packed configuration, or HCP, which configurization results in a minimum amount of void space for a given mass. The elliptical, random-sized lead shot 153 utilized by applicant is believed to at least partly assume an HCP configuration, although because of the random sizing and the elliptical configurations of some of the shot, voids between the larger particles are often filled by the smaller particles, whereby relatively high density is achieved.

The above formulas for potential and kinetic energy would tend to indicate that the maximum vibration damping capability might be achieved with a finely ground powder; however, as the particles become smaller, intermolecular attraction forces therebetween increase according to Van Der Waals' Equation of State whereby the particles begin to act as a single mass. In particular, clumping and bridging of groups of small particles occur whereby the groups tend to vibrate relative to each other but not amongst their particle components. The resulting restriction of movement in the three spatial axes decreases potential and kinetic energy according to the above formulas.

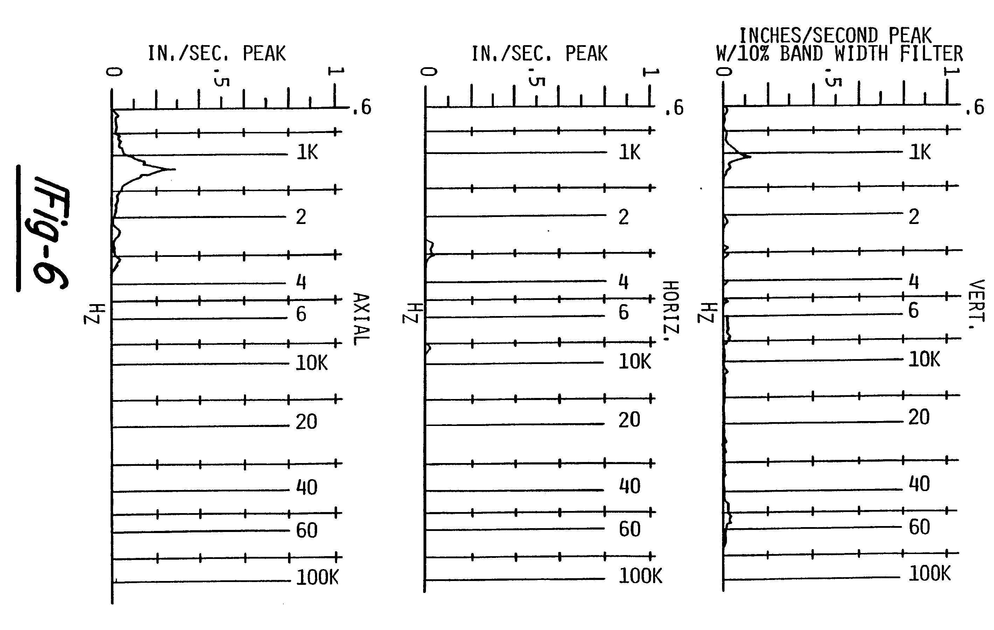

It has been empirically determined that the lead shot 153 sized and configured as discussed above maximizes vibration damping capacity at the lowest possible cost. The results of field tests conducted by applicant on actual road planing equipment and operation with several damping materials are shown in Figs. 5 through 7. Fig. 5 shows the results of vibration tests conducted wherein solid lead ingots were used for balast and for vibration damping. It is noted that primary vibrational peaks in all three spacial axes occur at approximately 1,000 Hz. or cycles per second.

The vibration is particularly severe in the vertical mode with secondary peaks occurring in the 6 Hz. to 15 Hz. range. Although the solid lead ingots have the highest possible density of approximately .411 pounds per cubic inch (11.38 grams per cubic centimeter) and hence provide adequate balast for the sub-frame 3, because they are solid they are relatively poor dampers of vibration.

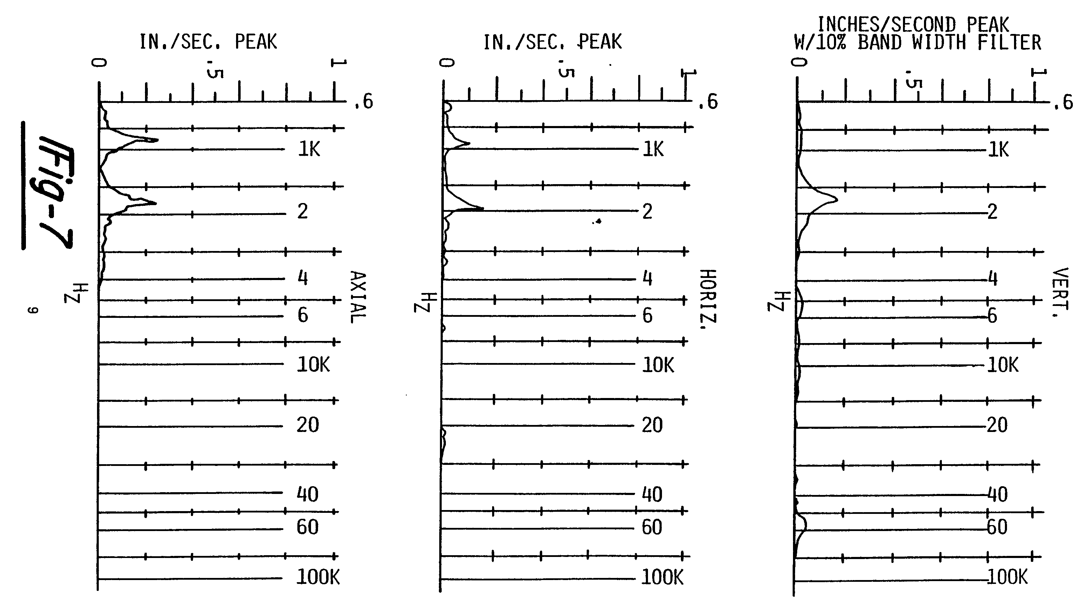

Additional tests were conducted with spherical shot, the results of which are shown in Fig. 6. As compared to the test results using ingots as shown in Fig. 5, the spherical shot greatly reduced vibration in all three spatial axes.

Finally, Fig. 7 shows the results of tests conducted using random-sized lead shot 153. The random-sized shot is particularly effective for reducing vibration in the vertical axis. In fact, in the vertical axis the random-sized shot 153 was approximately as effective as the spherical shot in absorbing vibration. Since vibration in the vertical axis is most detrimental to performance and blade life, the overall performance of the random-sized shot is considered to be nearly the equivalent of the spherical shot and hence, because the former is considerably less expensive, it is preferred for the vibration damper 151 of the present invention.

The ellipsoidal and spheroidal shot particles are particularly well adapted for vibrating with respect to each other because their rounded surfaces tend to allow a certain amount of movement and preclude clumping and bridging. In operation, the sub-frame 3 filled with the lead shot 153 becomes significantly warmer than a comparable sub-frame 3 provided with lead ingots, which indicates that the lead shot 153 functions as an effective transducer for converting vibrational energy from the engine 103 and the cutter head 117. Furthermore, the configuration of the sub-frame 3 is particularly designed for effective vibration transfer from the engine 103 and the cutter head 117 to the slightly constrained mass comprising the lead shot 153. Specifically, the engine mounts 61, 102 are placed on the engine section side tubes 66, 67 and the tool section front crosstube 75 respectively, all of which are filled with the lead shot 153. Vibration from the right angle drive transmission 124 is transmitted through the transmission support assembly 126 directly to the tool section side tubes 73, 74. Vibration from the cutter head 117 is transmitted through the cutter head mounting brackets 111 directly to the tool section side tubes 73, 74. Finally, the balast compartments 91, 92 are located whereby much of the vibrational energy from both the engine 103 and the cutter head 117 will be transferred thereto.

As compared to the same planer 1 without damping, it has been determined that operating speeds of approximately 20 % faster may be achieved by employing the lead shot 153 for vibration damping and balast than with solid lead ingots used for balast alone.

The random-sized shot 153 has a density of approximately .371 pounds per cubic inch, or approximately 90 % of the density of solid lead whereby the void volume in the shot 153 equals approximately 10 % of its total volume. The rod planer 1 weighs approximately 38 000 to 40 000 pounds (17.224 kilograms to 18.141 kilograms) and a total weight of lead shot 153 of approximately 800 to 1 000 pounds (363 to 454 kilograms) is employed.

**Claims**

1. A roadway surfacing machine (1) comprising:
a) a travelling rigid main frame (2);
b) a sub-frame (3) mounted on said main frame (2) and adapted to move vertically with respect to said main frame (2);
c) spatial voids (152, 154, 156, 157, 158) formed by the structural members of the sub-frame (3);
d) a road surfacing tool (117) rotatably mounted on said sub-frame (3); and
e) a prime mover (103) operably engaged with said road surfacing tool (117) to provide rotational motion thereto;
characterised by
f) a slightly constrained mass (153, 155) provided in said spatial voids (152, 154, 156 - 158) and comprising a plurality of particles adapted to move with respect to each other and with respect to said sub-frame in order to damp vibrations produced by said tool (117).

2. A machine according to Claim 1, characterized in that at least some of said particles have ellipsoidal configurations.

3. A machine according to Claim 1 or Claim 2, characterized in that at least some of said particles have spherical configurations.

4. A machine according to anyone of the preceding Claims, characterized by said prime mover (103) being mounted on said sub-frame (3) for said operable connection to said tool (117).

5. A machine according to anyone of the preceding Claims, characterized in that:
(a) said slightly constrained mass (153, 155) comprises lead shot (153); and
(b) said lead shot have diameters in the range of .030 inches to .040 inches (0.076 to 0.102 centimeters).

6. A machine according to anyone of the preceding Claims, characterized in that said slightly constrained mass comprises lead shot (153) with a density in the range of .350 pounds per cubic inch to .400 pounds per cubic inch (9.69 to 11.07 grams per square centimeter).

7. A machine according to anyone of the preceding Claims, characterized in that said frame includes a pair of side tubes (56, 57) each having a respective bore (152) filled with said particles (153).

8. A machine according to anyone of the preceding Claims, characterized in that said slightly constrained mass comprises:
(a) a lead ingot (155); and
(b) lead shot (153) comprising particles having rounded configurations.

9. A machine according to anyone of the preceding Claims, characterized by vibration transfer means (3) adapted to transfer vibration from said prime mover (103) and said road surfacing tool (117) to said slightly constrained mass.

10. A machine according to anyone of the preceding Claims, characterized in that said sub-frame (3) includes:
(a) a prime mover section (51) having a first member (56, 57) with a void space filled with said particles (153), said prime mover (103) being mounted on said prime mover section; and
(b) a driven tool section (52) having a second member (73, 74) with a void space filled with said particles, said road surfacing tool (117) being mounted on said driven tool section.

11. A machine according to Claim 10, characterized in that:
(a) said prime mover sub-frame section (51) comprises a pair of side tubes (56, 57) each having a bore with said particles (153) therein; and
(b) said driven tool section (52) including a pair of side tubes (73, 74) each having a bore with said particles therein.

12. A machine according to Claim 11, characterized by a crosstube (58, 59) interconnecting said prime mover section side tubes (56, 57) a crosstube (75, 76) interconnecting said driven tool section side tubes (73, 74), said crosstubes having bores with said particles (153) therein and extending transversely between said side tubes.

13. A machine according to Claim 11 or Claim 12, characterized by:
(a) a balast compartment (91, 92) extending transversely between said driven tool section side tubes (56, 57);

(b) a lead ingot (155) located in said balast compartment (91), said lead ingot being smaller than said compartment whereby a balast compartment space is formed between said lead ingot and said driven tool sub-frame section (52); and

(c) said balast compartment space being filled with said particles (153).

14. A machine according to Claim 13, characterized by:

(a) said balast compartment comprising a front balast compartment (91); and

(b) a back balast compartment (92) extending transversely between said driven tool section side tubes (73, 74), said back balast compartment being substantially filled with said particles (153).

15. A machine according to anyone of Claims 11 to 14, characterized in that mounting means for said driven tool comprises a pair of driven device mounting brackets (111) each attached to and depending downwardly from a respective driven device side tube (73, 74).

16. A machine according to anyone of Claims 11 to 15, characterized in that mounting means for said prime mover (103) comprises a pair of engine mounts (61, 62) each attached to a respective prime mover section side tube (56, 57).

17. A machine according to Claim 12, characterized in that mounting means for said prime mover includes a prime mover mount attached to said crosstube (58).

18. A machine according to Claim 11, characterized by:

(a) a gear drive transmission (124) to transmit drive between said prime mover (103) and said road surfacing tool (117); and

(b) a pair of gear drive transmission support assemblies (126) each attached to a respective driven tool section side tube (73, 74) and said gear drive transmission.

19. A machine according to any preceding Claim, characterized in that said particles (153) are random-sized and pass through a No. 7 mesh.

20. A machine according to anyone of Claims 1 to 18, characterized in that said particles (153) are random-sized and pass through a No. 17/18 mesh.

21. A machine according to anyone of the preceding Claims, characterized in that said sub-frame (3) is pivotally mounted on said main frame (2).

22. A machine according to anyone of the preceding Claims, characterized in that said particles (153) are sufficiently large to vibrate independently with respect to each other.

23. A machine according to anyone of the preceding Claims, characterized in that said particles engage said frame in a heat transfer relationship therewith.

24. A machine according to anyone of the preceding Claims, characterized in that said machine is in the form of a road planer (1).

25. A machine according to anyone of the preceding Claims, characterized in that said road surfacing tool comprises a rotary cutter head (117) rotating about a rotational axis (118) extending transversely with respect to said sub-frame (3).

26. A machine according to anyone of the preceding Claims, characterized in that said prime mover comprises an internal combustion engine (103).

27. A method of damping vibration in a roadway surfacing machine including a frame (3), a prime mover (103) mounted on said frame and a driven road surfacing tool (117) operably connected to said prime mover, which method is characterized by the steps of:

(a) providing a slightly constrained mass (153, 155) connected to said frame (3);

(b) transmitting vibrational energy from said prime mover and said driven tool to said slightly constrained mass;

(c) converting said vibrational energy in said slightly constrained mass to thermal energy;

(d) transferring said thermal energy from said slightly constrained mass to said frame; and

(e) dissipating said thermal energy from said frame.

28. A method according to Claim 27, characterized in that said slightly constrained mass comprises lead shot particles (153).

29. A method according to Claim 27 or Claim 28, characterized by the additional step of vibrating said lead shot particles (153) with respect to three spatial axes.

30. A method according to Claim 28 or Claim 29, characterized by the additional step of vibrating said lead shot particles (153) with respect to each other and with respect to said frame (3).

31. A method according to anyone of Claims 27 to 30, characterized in that said frame comprises a main frame (2) and a sub-frame (3), said prime mover (103) and said driven tool (117) being mounted on said sub-frame.

32. A method according to Claim 31, characterized by the additional step of pivotally connecting said main frame (2) and said sub-frame (3).

33. A method according to anyone of Claims 27 to 32, characterized by additional step of urging said driven tool (117) downwardly with the weight of said slightly constrained mass (153, 155).

**Patentansprüche**

1. Straßendecken-Bearbeitungs-Maschine (1) mit

a) einem fahrbaren festen Hauptrahmen (2),

b) einem Nebenrahmen (3), der an dem Hauptrahmen (2) befestigt ist und der in Vertikalrichtung gegenüber dem Hauptrahmen (2) bewegbar ist,

c) Hohlräumen (152, 154, 156, 157, 158), die von den Bauelementen des Nebenrahmens (3) gebildet werden,

d) einem eine Straßendecke bearbeitenden Werkzeug (117), das drehbar an dem Nebenrahmen (3) befestigt ist, und

e) einem ersten Motor (103), der betriebsmäßig mit dem die Straßendecke bearbeitenden Werkzeug (117) verbunden ist, um dieses in Rotation zu versetzen,

gekennzeichnet durch

f) eine geringfügig eingezwängte Masse (153, 155), die in den Hohlräumen (152, 154, 156 bis 158) angeordnet ist und die eine Vielzahl von Teilchen aufweist, die sich zueinander und gegenüber dem Nebenrahmen bewegen können, um Schwingungen zu dämpfen, die von dem Werkzeug (117) erzeugt werden.

2. Maschine nach Anspruch 1, dadurch gekennzeichnet, daß wenigstens einige der Teilchen ellipsoide Gestalt aufweisen.

3. Maschine nach Anspruch 2, dadurch gekennzeichnet, daß wenigstens einige der Teilchen kugelige Gestalt aufweisen.

4. Maschine nach einem der vorherigen Ansprüche, dadurch gekennzeichnet, daß der Motor (103) auf dem Nebenrahmen (3) für die betriebsmäßige Verbindung mit dem Werkzeug (117) befestigt ist.

5. Maschine nach einem der vorherigen Ansprüche, dadurch gekennzeichnet, daß

a) die geringfügig eingezwängte Masse (153, 155) Bleischrot (153) aufweist, und daß

b) der Bleischrot Durchmesser im Bereich von 0,030 Zoll bis 0,040 Zoll (0,076 bis 0,102 Zentimeter) aufweist.

6. Maschine nach einem der vorherigen Ansprüche, dadurch gekennzeichnet, daß die geringfügig eingezwängte Masse Bleischrot (153) mit einer Dichte im Bereich von 0,350 engl. Pfund pro Kubikzoll bis 0,400 engl. Pfund pro Kubikzoll (9,69 bis 11,07 Gramm pro Kubikzentimeter) aufweist.

7. Maschine nach einem der vorherigen Ansprüche, dadurch gekennzeichnet, daß der Rahmen ein Paar von Seitenrohren (56, 57) mit Bohrungen (152) aufweist, die mit den Teilchen (153) gefüllt sind.

8. Maschine nach einem der vorherigen Ansprüche, dadurch gekennzeichnet, daß die geringfügig eingezwängte Masse

a) einen Bleiblock (155) und

b) Bleischrot (153) mit Teilchen mit abgerundeter Gestalt umfaßt.

9. Maschine nach einem der vorherigen Ansprüche, gekennzeichnet durch eine Schwingungsübertragungs-Einrichtung (3) zum Übertragen von Schwingungen von dem ersten Motor (103) und dem die Straßendecke bearbeitenden Werkzeug (117) auf die geringfügig eingezwängte Masse.

10. Maschine nach einem der vorherigen Ansprüche, dadurch gekennzeichnet, daß der Nebenrahmen (3)

a) einen Abschnitt (51) für den ersten Motor mit einem ersten Element (56, 57) mit einem mit den Teilchen (153), gefüllten Hohlraum, wobei der erste Motor (103) an dem Abschnitt für den ersten Motor befestigt ist, und

b) einen Abschnitt (52) für das angetriebene Werkzeug mit einem ersten Element (73, 74) mit einem mit den Teilchen gefüllten Hohlraum, wobei das die Straßendecke bearbeitende Werkzeug (117) an dem Abschnitt für das angetriebene Werkzeug befestigt ist, umfaßt.

11. Maschine nach Anspruch 10, dadurch gekennzeichnet, daß

a) der Nebenrahmen-Abschnitt (51) für den ersten Motor ein Paar von Seitenrohren (56, 57) aufweist, von denen jedes mit einer Bohrung versehen ist, in welchen die Teilchen (153) angeordnet sind, und

b) daß der Abschnitt (52) für das angetriebene Werkzeug ein Paar von Seitenrohren (73, 74) aufweist, von denen jedes eine Bohrung mit den Teilchen darin aufweist.

12. Maschine nach Anspruch 11, gekennzeichnet durch ein Querrohr (58, 59), das die Seitenrohre (56, 57) des Abschnitts für den ersten Motor verbindet, und durch ein Querrohr (75, 76), das die Seitenrohre (73, 74) des Abschnitts für das angetriebene Werkzeug verbindet, wobei die Querrohre Bohrungen mit Teilchen (153) darin aufweisen und sich quer zwischen den Seitenrohren erstrecken.

13. Maschine nach Anspruch 11 oder 12, gekennzeichnet durch

a) ein Ballastabteil (91, 92), das sich quer zwischen den Seitenrohren (56, 57) des Abschnitts für das angetriebene Werkzeug erstreckt,

b) einen Bleiblock (155), der in dem Ballastabteil (91) angeordnet ist, wobei der Bleiblock kleiner ist als das Abteil, wodurch ein Ballastabteilraum zwischen dem Bleiblock und dem Nebenrahmenabschnitt (52) für das angetriebene Werkzeug ausgebildet wird, und

c) wobei der Ballastabteilraum mit den Teilchen (153) ausgefüllt ist.

14. Maschine nach Anspruch 13, dadurch gekennzeichnet, daß

a) das Ballastabteil ein vorderes Ballastabteil (91) und

b) ein hinteres Ballastabteil (92) aufweist, das sich quer zwischen den Seitenrohren (73, 74) des Abschnitts für das angetriebene Werkzeug erstreckt, und daß das hintere Ballastabteil im wesentlichen mit den Teilchen (153) ausgefüllt ist.

15. Maschine nach einem der Ansprüche 11 bis 14, dadurch gekennzeichnet, daß eine Befestigungseinrichtung für das angetriebene Werkzeug ein Paar von Befestigungsträgern (111) für das angetriebene Werkzeug aufweist, von denen jeder an einem Seitenrohr (73, 74) des angetriebenen Werkzeugs befestigt ist und sich von diesen nach unten erstreckt.

16. Maschine nach einem der Ansprüche 11 bis 15, dadurch gekennzeichnetm daß eine Befestigungseinrichtung für den ersten Motor (103) ein Paar von Motorbefestigungen (61, 65) aufweist, von denen jede an einem Seitenrohr (56, 57) des Abschnitts für den ersten Motor erstreckt.

17. Maschine nach Anspruch 12, dadurch gekennzeichnet, daß eine Befestigungseinrichtung für den ersten Motor eine erste Motorbefestigung aufweist, die an dem Querrohr (58) befestigt ist.

18. Maschine nach Anspruch 11, gekennzeichnet durch

a) eine Zahnantriebsübertragung (124) zur Übertragung des Antriebs zwischen dem ersten Motor (103) und dem die Straßendecke bearbeitenden Werkzeug (117), und

b) ein Paar von Zahnantriebsübertragungs-Trägeranordnungen (126), von denen jede an einem jeweiligen Seitenrohr (73, 74) des Abschnitts für das angetriebene Werkzeug und der Zahnantriebsübertragung befestigt ist.

19. Maschine nach einem der vorherigen Ansprüche, dadurch gekennzeichnet, daß die Größen der Teilchen (153) zufällig verteilt sind und diese durch ein Sieb Nr. 7 gehen.

20. Maschine nach einem der Ansprüche 1 bis 18, dadurch gekennzeichnet, daß die Größen der Teilchen (153) zufällig verteilt sind und diese durch ein Sieb Nr. 17/18 gehen.

21. Maschine nach einem der vorherigen Ansprüche, dadurch gekennzeichnet, daß der Nebenrahmen (3), schwenkbar an dem Hauptrahmen (2) angeordnet ist.

22. Maschine nach einem der vorherigen Ansprüche, dadurch gekennzeichnet, daß die Teilchen (153) ausreichend groß sind, um unabhängig voneinander zu schwingen.

23. Maschine nach einem der vorherigen Ansprüche, dadurch gekennzeichnet, daß die Teilchen an dem Rahmen in einer Wärmeübertragungs-Beziehung angreifen.

24. Maschine nach einem der vorherigen Ansprüche, dadurch gekennzeichnet, daß die Maschine in Form eines Straßenplanierers (1) ausgebildet ist.

25. Maschine nach einem der vorherigen Ansprüche, dadurch gekennzeichnet, daß das die Straßendecke bearbeitende Werkzeug einen rotierenden Schneidkopf (47) aufweist, der um eine Rotationsachse (118) rotiert, die sich quer zu dem Nebenrahmen (3) erstreckt.

26. Maschine nach einem der vorherigen Ansprüche, dadurch gekennzeichnet, daß der erste Motor ein Verbrennungsmotor (103) ist.

27. Verfahren zur Dämpfung von Schwingungen an einer Straßendeckenabtragungs-Vorrichtung mit einem Rahmen (3), einem ersten Motor (103), der an dem Rahmen befestigt ist, und mit einem angetriebenen, die Straßendecke bearbeitenden Werkzeug (117), das betriebsmäßig mit dem ersten Motor verbunden ist, wobei das Verfahren gekennzeichnet ist durch die Schritte:

a) Vorsehen einer geringfügig eingezwängten Masse (153, 155), die mit dem Rahmen (3) verbunden ist,

b) Übertragen der Schwingungsenergie von dem ersten Motor und dem angetriebenen Werkzeug an die geringfügig eingezwängte Masse,

c) Umwandeln der Schwingungsenergie in der geringfügig eingezwängten Masse in Wärmeenergie,

d) Übertragen der Wärmeenergie von der geringfügig eingezwängten Masse an den Rahmen, und

e) Ableiten der Wärmeenergie von dem Rahmen.

28. Verfahren nach Anspruch 27, dadurch gekennzeichnet, daß die geringfügig eingezwängte Masse Bleischrotteilchen (153) aufweist.

29. Verfahren nach Anspruch 27 oder 28, gekennzeichnet durch den zusätzlichen Schritt, daß die Bleischrotteilchen (153) auf drei räumlichen Achsen schwingen.

30. Verfahren nach Anspruch 28 oder 29, gekennzeichnet durch den zusätzlichen Schritt, daß die Bleischrotteilchen (153) zueinander und gegenüber dem Rahmen (3) schwingen.

31. Verfahren nach einem der Ansprüche 27 bis 30, dadurch gekennzeichnet, daß der Rahmen einen Hauptrahmen (2) und einen Nebenrahmen (3) aufweist und daß der erste Motor (103) und das angetriebene Werkzeug (117) an dem Nebenrahmen angeordnet sind.

32. Verfahren nach Anspruch 31, gekennzeichnet durch den zusätzlichen Schritt, daß der Hauptrahmen (2) und der Nebenrahmen (3) schwenkbar miteinander verbunden sind.

33. Verfahren nach einem der Ansprüche 27 bis 32, gekennzeichnet durch den zusätzlichen Schritt, daß das angetriebene Werkzeug (117) durch das Gewicht der geringfügig eingezwängten Masse (153, 155) nach unten gezwungen wird.

**Revendications**

1. Machine de surfaçage de route (1) comprenant:

(a) un châssis principal rigide de déplacement (2);

(b) un châssis secondaire (3) monté sur ledit châssis principal (2) et prévu peur se déplacer verticalement par rapport audit châssis principal (2);

(c) des espaces vides (152, 154, 156, 157, 158) définis par les éléments structurels du châssis secondaire (3);

(d) un outil de surfaçage de route (117) monté de façon tournante sur ledit châssis secondaire (3); et

(e) un moteur principal (103) relié fonctionnellement audit outil de surfaçage de route (117) pour lui communiquer un mouvement de rotation; caractérisée par:

(f) une masse légèrement comprimée (153, 155) prévue dans lesdits espaces vides (152, 154, 156 - 158) et comprenant une pluralité de particules qui peuvent se déplacer les unes par rapport aux autres et par rapport audit châssis secondaire afin d'amortir les vibrations engendrées par ledit outil (117).

2. Machine suivant la revendication 1, caractérisée en ce qu'au moins certaines desdites particules ont des configurations ellipsoïdales.

3. Machine suivant la revendication 1 ou la revendication 2, caractérisée en ce qu'au moins certaines desdites particules ont des configurations sphériques.

4. Machine suivant l'une quelconque des revendications précédentes, caractérisée en ce que ledit moteur principal (103) est monté sur ledit châssis secondaire (3) pour ladite liaison d'entraînement avec ledit outil (117).

5. Machine suivant l'une quelconque des revendications précédentes, caractérisée en ce que:

a) ladite masse légèrement comprimée (153; 155) est constituée de particules de plomb (153) et;

b) lesdites particules de plomb ont des diamètres compris entre 0,076 cm et 0,102 cm.

6. Machine suivant l'une quelconque des revendications précédentes, caractérisée en ce que:

ladite masse légèrement comprimée est constituée de particules de plomb (153) ayant une densité dans la plage de 9,69 g/cm$^3$ à 11,07 g/cm$^3$.

7. Machine suivant l'une quelconque des revendications précédentes, caractérisée en ce que ledit châssis comprend deux tubes latéraux (56, 57) comportant chacun un passage intérieur respectif (152) rempli avec lesdites particules (153).

8. Machine suivant l'une quelconque des revendications précédentes, caractérisée en ce que ladite masse légèrement comprimée comprend:

(a) un lingot de plomb (155); et

(b) des particules de plomb (153) comprenant des particules ayant des configurations arrondies.

9. Machine suivant l'une quelconque des revendications précédentes, caractérisée par des moyens de transmission des vibrations (3), prévus pour transférer les vibrations dudit moteur principal (103) et dudit outil de surfaçage de route (117) à ladite masse légèrement comprimée.

10. Machine suivant l'une quelconque des revendications précédentes, caractérisée en ce que ledit châssis secondaire (3) comprend:

a) une partie moteur principal (51) comportant un premier élément (56, 57) avec un espace vide rempli avec lesdites particules (153), ledit moteur principal (103) étant monté sur ladite partie moteur principal; et

b) une partie outil entraîné (52) comportant un deuxième élément (73, 74) à espace vide rempli avec lesdites particules, ledit outil de surfaçage de route (117) étant monté sur ladite partie outil entraîné.

11. Machine suivant la revendication 10, caractérisée en ce que:

a) ladite partie moteur principal (51) du châssis secondaire comporte deux tubes latéraux (56, 57) ayant chacun un passage intérieur contenant lesdites particules (153); et

b) ladite partie outil entraîné (52) comprend deux tubes latéraux (73, 75) ayant chacun un passage intérieur contenant lesdites particules.

12. Machine suivant la revendication 11, caractérisée par un tube transversal (58, 59) interconnectant lesdits tubes latéraux (56, 57) de la partie moteur principal et un tube transversal (75, 76) interconnectant lesdits tubes latéraux (73, 74) de la partie outil entraîné, lesdits tubes transversaux ayant des passages intérieurs contenant lesdites particules (153) et s'étendant transversalement entre lesdits tubes latéraux.

13. Machine suivant la revendication 11 ou la revendication 12, caractérisée par:

a) un compartiment de lestage (91, 92) s'étendant transversalement entre lesdits tubes latéraux (56, 57) de la partie outil entraîné:

b) un lingot de plomb (155) placé dans ledit compartiment de lestage (91) ledit lingot de plomb étant plus petit que ledit compartiment de sorte qu'un espace de compartiment de lestage est défini entre ledit lingot de plomb et ladite partie outil entraîné (52) du châssis secondaire; et

c) ledit espace de compartiment de lestage étant rempli avec desdites particules (153).

14. Machine suivant la revendication 13, caractérisée en ce que:

a) ledit compartiment de lestage comprend un compartiment de lestage avant (91); et

b) un compartiment de lestage arrière (92) s'étend transversalement entre lesdits tubes latéraux (73, 74) de la partie outil entraîné, ledit compartiment de lestage arrière étant sensiblement rempli avec lesdites particules (153).

15. Machine suivant l'une quelconque des revendications 11 à 14, caractérisée en ce que les moyens de montage pour ledit outil entraîné comprennent deux consoles (111) de montage de dispositif entraîné fixées chacune à un tube latéral respectif (73, 74) du dispositif entraîné et s'étendant vers le bas à partir de ce tube.

16. Machine suivant l'une quelconque des revendications 11 à 15, caractérisée en ce que les moyens de montage pour ledit moteur principal (103) comprennent deux supports de moteur (61, 62) fixés chacun à un tube latéral respectif (56, 57) de la partie moteur principal.

17. Machine suivant la revendication 12, caractérisée en ce que les moyens de montage pour ledit moteur principal comprennent un support de moteur principal fixé audit tube transversal (59).

18. Machine suivant la revendication 11, caractérisée par:

a) une transmission d'entraînement à engrenages (124) pour transmettre l'entraînement entre ledit moteur principal (103) et ledit outil de surfaçage de route (117); et

b) deux supports (126) de transmission d'entraînement à engrenages, fixés chacun à un tube latéral (73, 74) respectif de la partie outil entraîné et à ladite transmission d'entraînement à engrenages.

19. Machine suivant l'une quelconque des revendications précédentes, caractérisée en ce que lesdites particules (153) sont non calibrées et traversent un tamis de 2,8 mm (7 mesh) d'ouverture de maille.

20. Machine suivant l'une quelconque des revendications 1 à 18, caractérisée en ce que lesdites particules (153) sont non calibrées et traversent un tamis de 0,9 mm (17/18 mesh) d'ouverture de maille.

21. Machine suivant l'une quelconque des revendications précédentes, caractérisée en ce que ledit châssis secondaire (3) est monté de façon pivotante sur ledit châssis principal (2).

22. Machine suivant l'une quelconque des revendications précédentes, caractérisée en ce que lesdites particules (153) sont suffisamment grossies pour vibrer indépendamment les unes des autres.

23. Machine suivant l'une quelconque des revendications précédentes, caractérisée en ce que lesdites particules sont en contact avec ledit châssis et en relation de transfert de chaleur avec celui-ci.

24. Machine suivant l'une quelconque des revendications précédentes, caractérisée en ce que ladite machine est sous la forme d'une machine de surfaçage de route (1).

25. Machine suivant l'une quelconque des revendications précédentes, caractérisée en ce que ledit outil de surfaçage de route comprend une tête de coupe rotative (117) tournant autour d'un axe de rotation (118) transversal par rapport audit châssis secondaire (3).

26. Machine suivant l'une quelconque des revendications précédentes, caractérisée en ce que ledit moteur principal est un moteur à combustion interne (103).

27. Procédé d'amortissement des vibrations dans une machine de surfaçage de route comprenant un châssis (3), un moteur principal (103) monté sur ledit châssis et un outil entraîné de surfaçage de route (117) relié fonctionnellement audit moteur principal, ledit procédé étant caractérisé par les opérations de:

a) utilisation d'une masse légèrement comprimée (153, 155) reliée audit châssis (3);

b) transmission d'une énergie de vibration dudit moteur principal et dudit outil entraîné à ladite masse légèrement comprimée;

c) conversion de ladite énergie de vibration en énergie thermique dans ladite masse légèrement comprimée;

d) transfert de ladite énergie thermique de la dite masse légèrement comprimée audit châssis; et

e) dissipation de ladite énergie thermique dudit châssis.

28. Procédé suivant la revendication 27, caractérisé en ce que ladite masse légèrement comprimée comprend des particules de plomb (153).

29. Procédé suivant la revendication 27 ou la revendication 28, caractérisé par l'opération supplémentaire de vibration desdites particules de plomb (153) par rapport à trois axes spatiaux.

30. Procédé suivant la revendication 28 ou la revendication 29, caractérisé par l'opération supplémentaire de vibration desdites particules de plomb (153) les unes par rapport aux autres et par rapport audit châssis (3).

31. Procédé suivant l'une quelconque des revendications 27 à 30, caractérisé en ce que ledit châssis comprend un châssis principal (2) et un châssis secondaire (3), ledit moteur principal (103) et ledit outil entraîné (117) étant montés sur ledit châssis secondaire.

32. Procédé suivant la revendication 31, caractérisé par l'opération supplémentaire de connection pivotante dudit châssis principal (2) et dudit châssis secondaire (3).

33. Procédé suivant l'une quelconque des revendications 27 à 32, caractérisé par l'opération supplémentaire de poussée dudit outil entraîné (117) vers le bas par le poids de ladite masse légèrement retenue (153, 155).

_Fig-1_

_Fig-2_

Fig-3

Fig-4

**IFig-5**

_/Fig-6_

EP 0 218 642 B1

*Fig-7*